# EUROPEAN PATENT APPLICATION

(11) **EP 2 161 321 A2**
(43) Date of publication of application: **10.03.2010**
(21) Application number: 08737812.1
(22) Date of filing: 11.04.2008
(51) Int. Cl.: C10B 49/10, C10B 53/07, B09B 3/00

(54) **METHOD FOR TREATING PLASTICS, IN PARTICULAR WASTE PLASTICS, AND USE OF HYDROCARBONS COMING FROM THE CATALYTIC PYROLYSIS OF SAID WASTE PLASTICS**

(30) Priority: 12.04.2007 ES 200700972
(71) Applicant: Energy & Environment Consulting, S. L., 03001 Alicante (ES); Universidad Del Pais Vasco-Euskal Herriko Unibertsitatea, 48940 Leioa (Bizkaia) (ES)
(72) Inventor: AGUADO ZARRAGA, Roberto, E-48940 Leioa (ES); OLAZAR AURRECOECHEA, Martin, E-48940 Leioa (ES); BILBAO ELORRIAGA, Javier, E-48940 Leioa (ES); MARTINEZ CAMUS, Jose Leandro, 03450 Playa San Juan Alicante (ES)
(74) Representative: Ponti Sales, Adelaida
(86) International application number: PCT/IB2008/051387
(87) International publication number: WO 2008/126040

(57) **Abstract**

Includes the stage of carrying out catalytic pyrolysis of said plastics and is **characterised in that** said pyrolysis is carried out by means of the spouted-bed contact system and under conditions suitable for permitting total conversion of said plastics to gas, in reactor conditions (1), and in that it also includes the stage of generating electrical energy by means of cogeneration equipment fed from hydrocarbons. It is self-sufficient in energy terms and has very high energy efficiency.

## Description

The present invention relates to a process for the treatment of plastics, especially plastic wastes, and to a utilisation of hydrocarbons from the catalytic pyrolysis of said plastics.

### BACKGROUND OF THE INVENTION

A large amount of plastic wastes are generated nowadays, for which it is necessary to find out an outlet that goes beyond accumulating them in landfill sites, where they only give rise to environmental problems and degradation of the landscape.

Owing to their composition and properties, plastic waste materials constitute products that can be put to use as materials and for producing energy.

Processes are known in the art for making use of plastic waste materials by means of thermochemical breakdown of said wastes, whether by combustion, gasification or pyrolysis.

Pyrolysis is the most useful of the three ways to carry out thermochemical breakdown, since by varying the conditions of operation of the reactor (temperature and presence of cracking catalysts in the reaction medium), the composition of the products obtained can be adjusted to meet different needs.

The energy requirements of the process for utilisation of such waste by pyrolysis are nevertheless very high owing to the endothermic nature of the physical and chemical processes involved, that is, owing to the heat necessary to melt the polymer, bring it up to the reaction temperature and facilitate the chemical reactions of thermal and catalytic cracking. For this reason, in some processes, in order to keep the pyrolysis autothermally in the range of 600°C to 800°C it is necessary to carry out a partial combustion of said plastics, so that in practice full advantage is never taken of the waste.

Moreover, the catalytic pyrolysis of plastics has to date been carried out in reactors that present various deficiencies, such as: limitations in the transfer of materials and heat owing to poor contact between the gas and the solid, the need to use large beds in order to prevent adherence of the particles owing to coating with melted plastic, and high energy consumption in heating and driving the bed.

### DESCRIPTION OF THE INVENTION

The objective of the present invention is to resolve the disadvantages mentioned by developing a process for the treatment of plastics, especially plastic wastes, that is self-sufficient in energy terms and that enables said wastes to be reused with very high energy efficiency.

In accordance with a first aspect, the invention relates to a process for the treatment of plastics, especially plastic wastes, which includes the stage of carrying out catalytic pyrolysis of said plastics in the presence of a cracking catalyst selected for obtaining hydrocarbons, and is **characterised in that** said pyrolysis is carried out by means of the contact system known as spouted bed, and under conditions suitable to permit total conversion of said plastics to gas, in reactor conditions, and in that it also includes the stage of generating electrical energy by means of cogeneration equipment substantially fed from hydrocarbons from said gas.

In the present invention, cogeneration equipment shall be taken to mean any equipment or system capable of simultaneously generating and utilising electricity and heat from a liquid or gaseous fuel, whether by means of equipment that uses alternating motors, gas turbines, steam turbines and/or fuel cells.

Similarly, spouted-bed contact system shall be taken to mean the method of contact used to carry out the pyrolysis, and basically consists in placing the solid to be treated (plastic in this case) on a bed through the base of which the gas enters, and in using, instead of the classic distributor plate characteristic of fluidised beds, an orifice through which the gas passes, by opening a channel through which it ascends. Thus, the solid to be treated, which can be fed through the upper part, is circulating by covering a cycle composed of a descending phase in the annular zone of the bed that surrounds the aforesaid channel, and an ascending phase in the zone of the channel, driven by the gas.

Surprisingly, the process of the present invention presents the advantages described below.

It is a simple and very efficient process, since all the plastic is converted into gas, in reactor conditions, so that no waxes are generated and, furthermore, hydrocarbons are obtained from said gas and can be used directly as fuel in the cogeneration equipment. Said cogeneration equipment permits the greatest possible yield from the energy potential of the plastics and, moreover, both the electrical and the thermal energy produced by the cogeneration equipment can be used "in situ" to meet the needs of the process itself, so that the treatment process can be self-sufficient.

The spouted-bed contact system applied to the process of catalytic pyrolysis enables continuous operation of the treatment method, since it is not necessary to halt the pyrolysis operation in order to load in the solid to be treated and to discharge the catalyst. The spouted-bed system also offers other advantages. Among them is the fact that it permits effective treatment of solids of irregular texture and with a tendency to agglomerate, characteristics common to granular materials (for example, plastic-type waste materials), since the high-velocity action in said system breaks up the agglomerates. It is likewise possible to process particles of larger size than those processed in fluidised-bed systems. Moreover, for a given plastic feedstock flow, the volume of a spouted-bed reactor is substantially smaller than that of other reactors such as fluidised-bed reactors, for owing to the vigorous movement of the bed the layer of melted plastic that surrounds the particles can be up to 50 times greater.

Advantageously, in the process of the present invention, the cracking catalyst is selected for producing hydrocarbons of suitable molecular size for using as fuel in said cogeneration equipment and, preferably, the molecular size of said hydrocarbons is such that the molecules have fewer than 25 atoms of carbon.

Preferably, the pyrolysis reactor that includes the spouted-jet contact system has a wall with an inverted-cone configuration, with the lower part of said wall including the inlet of gas for moving the bed.

Application of a spouted-bed inverted-cone reactor to the catalytic pyrolysis of plastics provides considerable advantages that have a positive effect on the overall energy efficiency of the treatment process. Thus, use of the trunco-conical reactor permits an increased period of operational gas flow, work with wider distributions of particle sizes and treatment of a larger flow of plastics for a given volume. Also, less temperature is required for carrying out the catalytic pyrolysis and, as a consequence of all this, the energy needs of the process are greatly reduced.

Advantageously, said wall of trunco-conical configuration includes an upper prolongation of the same section as the conical zone and having the function of collecting the solids borne by the gas that emerges from the centre of the bed (plastic and catalyst).

Also advantageously, the zone of the pyrolysis reactor occupied by the cracking catalyst and forming the bed includes a central device that consists of two rings, one of which is located in the upper zone of the conical chamber and the other on the upper cylindrical prolongation. Said device permits the treatment of materials with narrow granular distributions (little variation of particle diameters) and very heterogeneous mixtures, that is, it permits the pyrolysation in a single operation of granulometric fractions of different sizes.

Preferably, the process of the invention includes the stage of recirculating part of the pyrolysis gas obtained to the reactor for fluidising the bed and for providing heat, with the temperature of said recirculated gas being maintained by thermal energy from post-combustion of the exhaust gases from said cogeneration equipment. Thanks to this, the pyrolysis operation can easily be maintained authothermically, without need for an external heat source, for example by carrying out a partial combustion of plastic waste materials, as done by the processes of the state of the art.

Advantageously, the treatment process of the present invention includes the stage of cooling the gas produced in reactor conditions in order to obtain said hydrocarbons, and said cooling is carried out by means of absorption refrigeration equipment that uses thermal energy, preferably hot water, from the cogeneration equipment.

Also advantageously, said plastics are ground, washed and dried before being pyrolised, with the thermal energy necessary for carrying out said drying coming from said cogeneration equipment.

Preferably, the process includes the stage of using thermal energy from said cogeneration equipment to satisfy the thermal needs of least one parallel process of treatment of products. The overall energy efficiency of the process, and its economic viability, can thus be very high.

According to a preferred embodiment, said parallel treatment process includes the stage of desalinising salty water using a desalinisation system by thermal evaporation. The process thus presents the advantage that, in addition to electrical energy, it produces drinking water of excellent quality.

According to the same preferred embodiment, the process includes the stage of recovering the carbon dioxide from the combustion gases of said cogeneration equipment and, advantageously, said recovery is carried out by means of a chemical absorption and extraction system. The economic viability, and the energy and material efficiency of the process of the present invention is thus very high, since it permits the production of liquid carbon dioxide that can be used as a raw material in various industrial processes.

Preferably, said wastes are thermoplastic wastes of polyolefinic and/or polyaromatic nature that lack heteroatoms.

Alternatively, said wastes can be plastic waste materials that include heteroatoms, such as polyvinyl chloride, in which case it is necessary to carry out an additional stage of low-temperature pyrolysis to remove said heteroatoms.

Preferably, said cracking catalyst includes zeolites.

In accordance with a second aspect, the present invention relates to the utilisation of hydrocarbons from the catalytic pyrolysis of plastics, especially plastic wastes, as fuel in cogeneration equipment for recovering the carbon dioxide from the combustion gases of said cogeneration equipment.

Thanks to the aforesaid use, the economic viability of production of carbon dioxide that takes place in the state of the art using the combustion gases from cogeneration equipment is enormously increased, since use is made of a high-energy fuel from the treatment of wastes.

Preferably, said hydrocarbons have a molecular size such that the molecules have fewer than 25 atoms of carbon.

### BRIEF DESCRIPTION OF THE DRAWINGS

For a better understanding of all that has been outlined a drawing is attached which, schematically and solely by way of non-restrictive example, shows a practical case of embodiment of the reactor with which said process can be carried out.

### DESCRIPTION OF A PREFERRED EMBODIMENT

The plastic that can be treated in the process will preferably be that supplied by plastic waste materials management companies. This is plastic classified by type of polymer and subsequently pressed and compacted into bales in order to reduce transportation costs. The process is nevertheless also of considerable interest for the waste-generating companies themselves, in which case the plastic materials to be treated do not have to be compacted, but only classified by type of polymer.

The process enables treatment for making energy-production and material use of thermoplastic polymeric wastes of polyolefinic nature (high- and low-density polyethylene and polypropylene, among others) and polyaromatic nature (polystyrene and high-impact polystyrene, among others). As noted in the description of the present invention, where these residues include heteroatoms, for example in quantities exceeding 1% by weight, it will be necessary to carry out an additional stage of low-temperature pyrolysis in order to remove such heteroatoms before proceeding to catalytic pyrolysis as such.

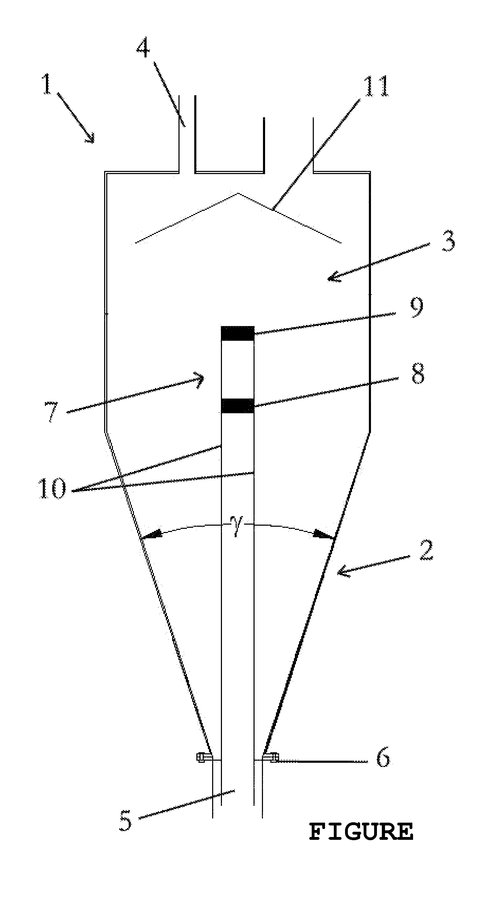

There follows a description of a preferred embodiment of the process of the present invention in which the wastes to be treated are thermoplastic wastes of polyolefinic nature, preferably polyethylene. In said embodiment, as can be seen in the enclosed figure, the wall of the reactor 1 presents an inverted-cone configuration 2 with a cylindrical upper prolongation 3.

In a first stage, the plastic waste materials are ground, and then subsequently washed and dried. The grinding stage has the object of comminuting the plastic in order to provide a homogeneous granular material suitable for feeding into the reactor 1 or pyrolysis reactor. Although the particle size depends on the geometry of the reactor 1, the spouted-bed technology proposed in this embodiment permits work with larger particular sizes than is the case with other types of reactors, which means an energy saving at this stage that results in increased end energy efficiency of the process.

Once ground, the granulated plastic is washed with water to remove remains of dirtiness, and is then dried using warm air. The washing waters for the plastics are treated in a treatment plant, and the sludges generated at the plant are also dried with warm air and sent to an inerts landfill. The thermal energy necessary for drying both the granulated plastic and the treatment water sludges from the waters used to wash the plastic is obtained from a system that recovers the heat from the cooling circuits of the alternating motors of the cogeneration equipment and from the combustion smoke of said motors, or from the combined-cycle steam turbine condensates.

The granulated, washed and dried plastic is fed into the pyrolysis reactor 1, preferably via the upper part, through the opening 4, while the gas necessary for providing heat and moving the catalyst bed is fed from the inlet 5.

The type of catalyst and the conditions under which the pyrolysis is carried out are those suitable for permitting total conversion of the plastic into gas, in reactor conditions, such that the process of the present invention does not generate waxes.

In the embodiment described, the bed of catalyst particles that is arranged in the interior of the reactor 1 is prepared from zeolites with good properties for cracking (HZSM5, β, HY), and with a particle diameter that depends on the specific geometry of said reactor 1.

As noted, the pyrolysis reactor 1 has a wall with an inverted-cone configuration 2, with a lower diameter larger than the diameter of the inlet 5 through which the gas is blown. Said reactor 1 further includes a cylindrical upper prolongation 3 of the same section as the trunco-conical zone 2, having the function of collecting the solids borne by the gas that emerges from the centre of the bed (plastic and catalyst).

The trunco-conical section 2 of the pyrolysis chamber or reactor 1 of the present embodiment has very particular gas inlet 5 dimensions and design that allow the achievement of maximum efficiency of gas-solid contact, minimum loss of charge and uniformity of the solids to be treated.

Accordingly, provision has been made for the angle of inclination y corresponding to the inverted-cone part 2 of the pyrolysis chamber or reactor 1 to be between 28° and 50°; and for the ratio between the diameter of the inlet 5 and the diameter of the base 6 of the trunco-conical part 2 to be between 1/2 and 5/6. Provision has also been made for the flow of gas at the inlet to be between 1.5 and 2 times greater than that pertaining to a predetermined minimum speed, depending on the specific properties of the material that makes up the bed (catalyst and plastic waste materials) and the geometrical factors of the reactor 1 itself.

As regards the size of the particles that form the bed (plastic and catalyst), it has been found that the ratio between the diameter of the gas inlet 5 to the reactor 1 and the diameter of said particles must preferably be between 2 and 30. Where the ratio between the diameter of the inlet 5 and the particle diameter exceeds 30 then a central device 7 is required that guides the inlet gas to the surface of the bed and opens the central jet required for the cyclic movement. This device 7 consists in two rings 8,9 of the same diameter as the gas inlet 5 from the pyrolysis chamber 1. One of them is flush with the upper part of the cone 2 and the other is above the cone 2. Both 8,9 are secured by means of three ribs 10 to the base 6 of the chamber 1. The purpose of the lower ring 8 is to achieve opening of the central channel and consequent stability of the bed. The upper ring 9 prevents the fountain rising too high, a situation that can occur when the particles are light or small. Furthermore, the bearing away of fine particles is prevented by placing a baffle 11 in the upper part of the cylindrical section 3.

The central device 7 described in the preceding paragraph has the advantage that it permits the treatment both of materials with narrow granular distributions (little variation of particle diameters) and very heterogeneous mixtures, that is, it permits pyrolysis in a single operation of granulometric fractions of different sizes.

At the outlet from the reactor 1, all the pyrolysis gas is recovered and cooled in order to obtain hydrocarbons (in liquid or gas phase) that can be employed in the cogeneration equipment unit or units for the production of electrical energy. All the plastic is thus made use of for producing energy.

In order to optimise said energy use, the cracking catalyst used is selected in order to provide hydrocarbons of a molecular size such that the molecules have fewer than 25 atoms of carbon.

Two types of equipment will preferably be used in order to carry out the cogeneration, one that uses hydrocarbons in gas state, and the other hydrocarbons in liquid state. Said equipment can carry out the cogeneration either by the system of internal combustion alternating motors or by the combined-cycle system that uses gas and steam turbines and a boiler. Indeed, any system capable of generating electricity and thermal energy from a fuel can be suitable.

In the embodiment described, part of the pyrolysis gas produced is recirculated to the pyrolysis reactor 1 for moving the bed and providing heat. The thermal energy to maintain the temperature level of the recirculated pyrolysis gases is obtained from post-combustion of the exhaust gases from the cogeneration equipment, since it is known that the temperature of said gases (smoke at 420°C with 12% oxygen) can be increased up to 600°C by carrying out a post-combustion by supplying additional oxygen.

Recirculation of pyrolysis gas at 600°C presents the advantage of allowing the pyrolysis operation to be maintained autothermally without need for an external source of heat, thereby enormously increasing the energy efficiency of the process.

In order to take the utmost advantage of the heat from the cogeneration equipment, provision has been made for cooling of the pyrolysis gases in order to provide hydrocarbons, carried out by absorption refrigeration equipment that employs hot water from the cogeneration equipment of the process.

Both the thermal energy and the electrical energy generated with the cogeneration equipment can also be employed to meet the energy needs of parallel processes of treatment of waste or products. The energy efficiency of the process, and its economic viability, are thus increased still further.

In the embodiment described, part of the thermal energy from the cogeneration is employed to obtain drinking water by means of a system of desalinisation of salty water by multi-stage thermal evaporation that uses hot water obtained from the exhaust gases of the alternating motors of the cogeneration equipment.

Finally, the process described also makes provision for recovery and concentration of the carbon dioxide from the combustion smoke of the cogeneration equipment, by means of a chemical absorption and extraction system that, preferably, employs a 30% solution of monoethanolamine as an absorbent. The outlet gas from the system is cooled and compressed until the carbon dioxide is liquefied for subsequent storage in tanks. The gas obtained has over 99.8% content in carbon dioxide.

Surprisingly, the process of the present invention constitutes an integral process for the treatment of plastics, especially plastic wastes, of high energy efficiency, which in addition to electrical energy, permits other products such as drinking water and liquid carbon dioxide to be produced.

The treatment process of the present invention is very viable economically, since it permits the treatment of a large quantity of plastic waste materials with the maximum energy and material efficiency, thus constituting a real alternative to the dumping of plastics that come mostly from used containers.

By way of example, said process can treat up to 50,000 t/year of plastic containers from which the following products and energy can be obtained:
Electrical energy: 165,630,920 kWh/year
Drinking water: 5,035,406 m³/year
Carbon dioxide: 46,376,660 kg/year

## Claims

1. Process for the treatment of plastics, especially plastic wastes, that includes the stage of carrying out catalytic pyrolysis of said plastics in the presence of a cracking catalyst selected to provide hydrocarbons, **characterised in that** said pyrolysis is carried out by means of the contact system known as spouted bed, and under conditions suitable to permit total conversion of said plastics to gas, in reactor conditions (1), and **in that** it also includes the stage of generating electrical energy by means of cogeneration equipment substantially fed from said hydrocarbons.

2. Process according to claim 1, **characterised in that** the molecular size of said hydrocarbons is such that the molecules have fewer than 25 atoms of carbon.

3. Process according to either of claims 1 or 2, **characterised in that** said pyrolysis is carried out in a reactor (1) that includes a wall with an inverted-cone configuration (2).

4. Process according to claim 3, **characterised in that** said wall of trunco-conical configuration (2) includes a cylindrical upper prolongation (3).

5. Process according to any of the preceding claims, **characterised in that** includes the stage of recirculating part of said gas to the pyrolysis reactor (1) for fluidising the bed and for providing heat, with the temperature of said recirculated gas being maintained by thermal energy from post-combustion of the exhaust gases from said cogeneration equipment.

6. Process according to any of the preceding claims, **characterised in that** it includes the stage of cooling said gas obtained in reactor conditions (1) in order to obtain said hydrocarbons, and **in that** said cooling is carried out by means of absorption refrigeration equipment that uses thermal energy from the cogeneration equipment.

7. Process according to any of the preceding claims, **characterised in that** said plastic waste materials are ground, washed and dried before being pyrolised, with the thermal energy necessary for carrying out said drying coming from said cogeneration equipment.

8. Process according to any of the preceding claims, **characterised in that** it includes the stage of recovering the carbon dioxide from the combustion gases of said cogeneration equipment.

9. Process according to any of the preceding claims, **characterised in that** it includes the stage of using thermal energy from said cogeneration equipment to satisfy the thermal needs of at least one parallel process of treatment of wastes or products.

10. Process according to claim 9, **characterised in that** said parallel treatment process includes the stage of desalinising salty water using a desalinisation system by thermal evaporation.

11. Process according to any of the preceding claims, **characterised in that** said wastes are thermoplastic wastes of polyolefinic nature that lack heteroatoms.

12. Process according to any of the preceding claims, **characterised in that** said wastes are thermoplastic wastes of polyaromatic nature that lack heteroatoms.

13. Process according to any of claims 1 to 10, **characterised in that** said wastes are plastic waste materials that include heteroatoms, and **in that** before said stage of catalytic pyrolysis an additional stage of low-temperature pyrolysis must be carried out to remove said heteroatoms.

14. Process according to any of the preceding claims, **characterised in that** said cracking catalyst includes zeolites.

15. Utilisation of hydrocarbons from the catalytic pyrolysis of plastics, especially plastic wastes, as fuel in cogeneration equipment for recovering the carbon dioxide from the combustion gases of said equipment.

16. Utilisation according to claim 15, in which said hydrocarbons have a molecular size such that the molecules have fewer than 25 atoms of carbon.
